Europäisches Patentamt

European Patent Office

Office européen des brevets

(11) Publication number: **0 432 831 A2**

# EUROPEAN PATENT APPLICATION

(21) Application number: 90203168.1

(22) Date of filing: 03.12.90

(51) Int. Cl.5: **G02F 1/1347**

(30) Priority: 08.12.89 US 448025

(43) Date of publication of application:
**19.06.91 Bulletin 91/25**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **Stupp, Edward Henry**
**c/o INT. OCTROOIBUREAU B.V., Prof.**
**Holstlaan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

(54) **Double cell liquid crystal display with composite structure and display device incorporating same.**

(57) A double cell active matrix thin film transistor switched liquid crystal display in which the twist directions of the two cells is opposite, has a common central wall of a quartz substrate carrying the thin film transistor array on one surface, flanked on either side by outer cell wall of glass. The symmetry of the structure cancels stresses induced by the thermal expansion mismatch between the quartz and the glass, enabling use of the cheaper glass material for the outer cell walls, as well as close thermal coupling between the two cells. facilitating the ability of the double cell structure to compensate for thermally induced changes in optical anisotropy.

FIG.2

EP 0 432 831 A2

# DOUBLE CELL LIQUID CRYSTAL DISPLAY WITH COMPOSITE STRUCTURE AND DISPLAY DEVICE INCORPORATING SAME.

This invention relates to liquid crystal displays, and more particularly relates to a composite structure which compensates for thermally induced mechanical and optical effects in a double cell liquid crystal display, and also relates to a display device incorporating it.

In an LCD cell, a liquid crystal (LC) material is sandwiched between two optically transparent walls, the inner surfaces of which each carry an orienting layer in contact with the LC, which causes a preferential alignment of the LC molecules adjacent the layers. Because the LC molecules also tend to align with one another, as well as with the orienting layers, a twist can be imparted to the LC by assembling the cell with a non-parallel orientation of the orienting layers. For example, arranging these layers with their alignment directions orthogonal to one another produces a 90° twist of a nematic LC from one surface to the other. This twist enables the LC to rotate linearly polarized light by 90°, so that the amount of light transmitte by the device can be controlled by an analyzer. Furthermore, the LC can be untwisted by application of a voltage, so that, e.g., light blocked by an analyzer having its polarization direction oriented parallel to that of the polarizer, can be passed by application of an appropriate voltage to the LC cell.

The degree to which the LCD can provide rotation (and extinction, in the case of parallel polarizer) of the light depends upon the combination of wavelength of the light, cell thickness and optical anisotropy or birefringence of the LC. Non-optimum combinations can result in varying degrees of ellipticity of the polarized light, so that, e.g., between parallel polarizer and analyzer, not all of the light is blocked. Furthermore, certain orienting layers cause the adjacent LC molecules to have a tilt with respect to the cell walls, which can, especially for high tilt angles, also result in such ellipticity, allowing light leakage and thus reduced contrast of an LCD display operating in the dark off-state (no voltage applied).

In co-pending Patent Application PHA 21.537, the contrast ratio of a twisted nematic liquid crystal display (TN LCD) operating in the dark off-state is significantly improved by adding a second cell, called a compensating cell, in series with the first cell. The second cell has the same thickness and the same liquid crystal as the first cell, but has a different chiral additive to provide an opposite twist direction. The effect of this second cell is to impart a rotation to the polarized light which is equal but opposite to that imparted by the first cell, thus cancelling any ellipticity of the polarized light caused by deviations of cell thickness, optical anisotropy or tilt angle of the LC, or wavelength of the light, from the optimum values for a single cell LCD. As a result, the optical transmission of such a double cell TN LCD, and thus its contrast ratio (CR) , are substantially independent of the wavelength of the incident radiation and the cell thickness, so that different cell thicknesses are no longer required in order to obtain optimum contrast ratio for different wavelengths of incident radiation, for example, the separate red, blue and green channels in an LCD color projection television (PTV)

In a currently envisioned commercial embodiment of such a color PTV, the LCDs are of a known active matrix type, having an array of thin film transistor (TFT) switches associated with an array of pixel elements formed by the crossings of orthogonally relates row and column electrodes. In such LCDs, the current state of the art dictates that the TFT array be fabricated at high temperature on a quartz substrate. Due to the cost of quartz, it would be desirable to substitute a less expensive material such as glass for use as the substrate, or at least for the opposing substrate which supports the counter electrodes. However, the significant thermal expansion mismatch between quartz and glass would cause cells made of these two different materials to bow, for example, during fabrication, as well as during temperature excursions occurring during operation of the device.

Additionally, temperature differences between the active cell and the compensator cell during operation (e.g., during warm-up) cause the optical birefringence of the liquid crystal materials to vary appreciably, causing the contrast ratio to change from its optimized value.

Accordingly, it is an object of the invention to provide a double cell active matrix TFT-switched LCD which combines different cell wall materials in a composite double cell structure.

It is another object of the invention to provide such an LCD in a composite structure which compensates for thermal expansion mismatch between the different wall materials.

It is another object of the invention to provide such an LCD in which compensation for changes in the optical birefringence of the liquid crystal material caused by temperature excursions occurring during operation of the LCD is facilitated.

In accordance with the invention, an active matrix TFT-switched double cell LCD is characterized by a composite structure in which a substrate of a first optically transparent material, one side of which contains a TFT array, serves as the common inner wall for a first (herein termed active) and a second (herein termed compensator) cell, and substrates of a second optically transparent material form the outer walls of such first and second cells. Thus, any tendency of one of the LCD cells to bow upon a change in temperature due to the thermal expansion mismatch between the different substrate materials is substantially compensated by the tendency of the other cell to bow in the opposite direction.

The use of substantially the same cell size and thickness insures that the tendency to bow is substantially equal for both cells.

In addition, the use of a common wall for both cells insures a good thermal coupling between the cells, facilitating the ability of the cells to compensate for changes in the optical birefringence of the liquid crystal material caused by temperature excursions during operation.

In accordance with a preferred embodiment of the invention, the common wall is quartz and the outer walls are glass. In accordance with another embodiment the common wall is also glass, but a glass having a lower coefficient of thermal expansion than the outer walls.

In accordance with another aspect of the invention, a display device such as a color projection television includes at least one double cell LCD with such a composite structure.

Fig. 1 is a cross-section view of one embodiment of an active matrix TFT switched composite double cell LCD of the invention; and

Fig. 2 is a diagrammatic plan view of one embodiment of a liquid crystal display (LCD) color projection television (PTV) system employing three composite double cell LCDs of the invention.

## DESCRIPTION OF THE PREFERRED EMBODIMENTS

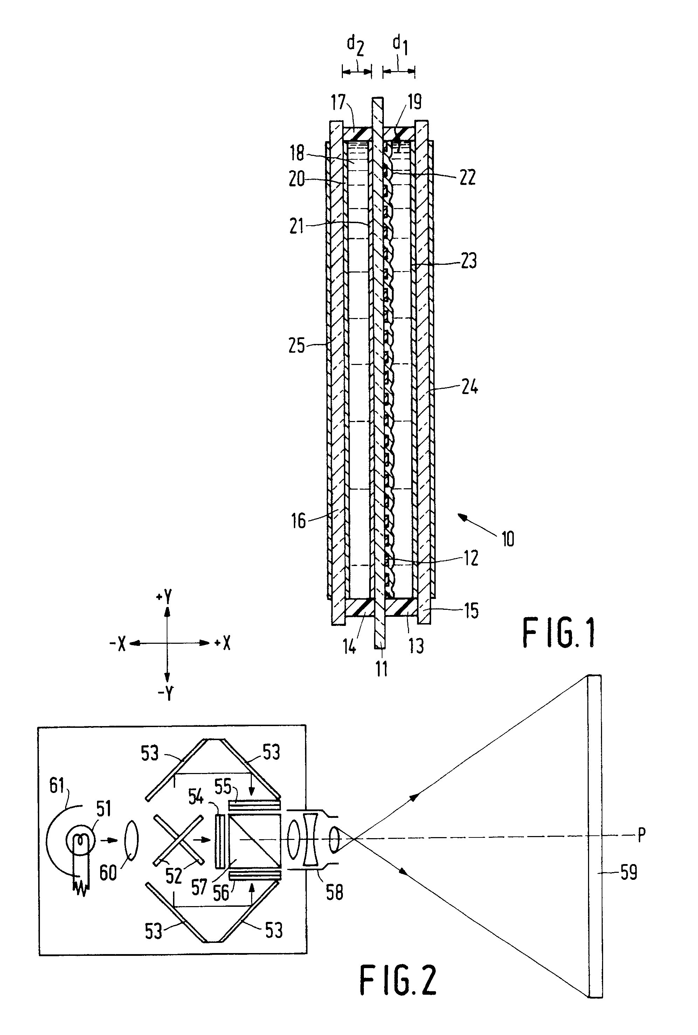

Fig. 1 shows a double cell LCD with composite structure 10 in accordance with the invention, including an optically transparent central quartz substrate 11 supporting an array of thin film transistors (TFTs) 12, and serving as a common inner wall for cells 13 and 14, referred to herein as the active cell and the compensator cell, respectively. The outer walls of these cells consist of optically transparent glass plates 15 and 16, peripherally sealed to the quartz substrate 11 by a chemically, thermally or UV curable adhesive 17, such as epoxy. the cells are filled with liquid crystal materials 18 and 19, and the inner walls of the cells bear orienting layers 20, 21, 22 and 23 in contact with the liquid crystal materials 18 and 19, respectively. As is known, these orienting layers may be for example, a rubbed polyimide of a known type. The liquid crystal materials 18 and 19 are preferably the same, for example, a twisted nematic (TN) liquid crystal having a proprietary formulation known as ZLI 84-460, manufactured by E. Merck of Dormstadt, W. Germany, but contain different chiral additives to impart opposite directions of twist. The cholesteric additive
n cyano-4'-(2-methyl)-isobutyl-biphenyl (obtainable as CB15 from BDH Chemicals of Poole, U.K.) is one example of an additive imparting a counter-clockwise twist, and ZLI 811, a Merck cholesteric formulation, is an example of a clock-wise twist additive.

The distance between the plates is typically about 6 to 8 microns, and is maintained by spacer beads which are distributed regularly over the surfaces of the plates and are not shown in the drawing.

The orienting layers together with the chiral addition cause the liquid crystals to undergo a rotation, commonly referred to as the twist angle, of approximately 90° over the cell thickness. In addition to the twist angle, the liquid crystal molecules make an angle with the cell walls, the so-called tilt angle, dependent upon the type and condition of formation of the orienting layer.

The outer surfaces of the glass walls 15 and 16 furthermore each carry a linear polarizer. Polarizer 25 intercepts incident light (indicated by the arrow) and polarizer 24 (designated the analyzer) intercepts the light transmitted by the device.

TFT array 12 is located under orienting layer 22, while counter electrode 26 is located under orienting layer 23.

The display cells can be switched from a first stable state to a second stable state differing optically from the first by driving the TFT array 12 in a suitable known manner. For the sake of simplicity, the row and column electrodes used for driving the TFT array are not shown.

Because the drive cell rotates the polarized light through a 90° angle, and the compensator cell rotates the light back through the same angle, a parallel orientation of polarizer and analyzer will in the off-state (no voltage applied) result in a white (light transmitting) condition. By rotating one of the polarixers 90° with respect to the other (crossed orientation) a dark (light absorbing) off-state can be achieved.

It will, of course, be appreciated that the positions of the drive cell and compensator cells may be switched without appreciably effecting the operation of the device. As taught in co-pending patent application Serial No. , where the thickness of the cells $d_1$ and $d_2$ are approximately the same and the liquid crystal materials 18 and 19 have substantially the same optical anisotropy and equal but opposite twist angles, the dark off-state and thus the contrast ratio of the device is significantly improved. In addition, in accordance with the present invention, the described construction of the LCD compensates for the bowing of the individual cells caused by the thermal expansion mismatch between the common quartz wall and the outer glass walls, and also facilitates compensation for changes in optical anisotropy caused by differences in temperature in the drive and compensator cells during operation of the device due to the close thermal coupling of the two cells. This thermal coupling is enhanced by the use of a thin quartz substrate (for example, less than 1 millimeter).

Furthermore, due to the effect of the compensator cell, an optimum constrast ratio can be maintained independent of cell thickness and wavelength of the incoming radiation as taught in the above referenced co-pending patent application Serial No.

Referring now to Fig. 2, there is shown a diagrammatic representation of an LCD color projection television system employing a front projection screen. In this arrangement, light from a tungsten halogen lamp 51 is variously transmitted and reflected through a crossed pair of dichroic mirrors 52 and adjacent mirrors 53 to pass through three double cell composite liquid crystal displays 54, 55 and 56. These three LCD's modulate three channels to create the red, green and blue portion of a TV picture. The dichroic mirrors 52 break the white light source 51 into red, blue and green portions of the spectrum. These three color portions are then recombined by way of a dichroic prism 57. The recombined light is projected by way of a projection lens 58 along a projection axis P to a projection screen 59.

This system also includes a condenser arrangement consisting of a condenser lens 60 and a reflector 61. The condenser lens 60 is designed for maximum collection efficiency to collect light emitted in the +X direction. The spherical reflector 61 collects light emitted in the -X direction and images the light of the lamp back onto itself.

Because a double cell composite LCD of the invention exhibits transmission values and contrast ratios substantially independent of cell thickness or wavelength of the incident radiation, such LCDs may be employed in such a projection television device with the significant advantage that, so long as each composite LCD has matching cell thicknesses, these matching thicknesses may be the same or may vary from LCD to LCD, thus freeing the manufacturing process from the requirement for the use of different optimum thicknesses for different wavelengths and from the requirement for close tolerances on thickness.

Furthermore, such double cell composite constructions of the invention are capable of compensating for changes in optical anisotropy brought about by temperature excursions occurring during device operation, particularly the initial warm-up period after device turn-on.

## Claims

1. A double cell active matrix thin film transistor switched liquid crystal display, each cell comprising a pair of opposed optically transparent cell walls, a liquid crystal material filling the space between the walls, and an orienting layer on the inner surface of each wall in contact with the liquid crystal material, the inner surface of one of the walls of one of the cells containing a thin film transistor array,

characterized by a composite structure in which the cell wall containing the thin film transistor array consists of a single substrate of a first optically transparent material, the substrate serving as a common inner wall for both cells, and the outer walls both consist of a substrate of a second optically transparent material.

2. The LCD of Claim 1 in which the first material is quartz and the second material is glass.

3. The LCD of Claim 1 in which the twist directions in the cells are opposite each other.

4. The liquid crystal display of Claim 1 in which the thickness of the liquid crystal region of each cell are substantially the same.

5. The liquid crystal display of Claim 1 in which the cells are sealed around their periphery with a curable adhesive.

6. The liquid crystal display of Claim 5 in which the adhesive is an epoxy resin.

7. The liquid crystal display of Claim 2 in which the thickness of the quartz substrate is less than 1mm.

8. The liquid crystal display of Claim 1 in which the first material is glass and the second material is glass having a different coefficient of thermal expansion than that of the first material.

9. A display device including at least one double cell active matrix thin film transistor switched liquid crystal display in which each cell comprises a pair of opposed optically transparent cell walls, a liquid crystal material filling the space between the walls, and orienting layers on the inner surfaces of the walls in contact with the liquid crystal material, the inner surface of one of the walls of one of the cells containing a thin film transistor array,

characterized by a composite structure in which the cell wall containing the thin film transistor array consists of a substrate of a first material, the substrate serving as a common inner wall for both cells, and the outer cell walls both consist of a substrate of a second material.

10. The display device of Claim 9 which comprises a projection television display device including means for creating separate red, blue and green monochrome components of a color image on three liquid crystal displays, a projection screen, and means for superimposing the separate components of the image onto the screen, whereby a full color display is realized.

11. The display device of Claim 9 in which all three of the liquid crystal displays comprise a double cell composite structure.

$d_2$ $d_1$

17 19

18

20 22

21

23

25

24

16

12 10

15

14 13

11

+Y

-X +X

-Y

# FIG.1

61

51 53 53

54 55

52 57 56 60

53 53

58 59

P

# FIG.2